# EUROPÄISCHE PATENTANMELDUNG

(11) **EP 0 812 052 A1**
(43) Veröffentlichungstag der Anmeldung: **10.12.1997**
(21) Anmeldenummer: 97108952.9
(22) Anmeldetag: 03.06.1997
(51) Int. Cl.: H02K 11/04

(54) **Frequenzumrichter für eine Antriebsvorrichtung**

(30) Priorität: 04.06.1996 DE 19622396
(71) Anmelder: Stoev, A., Dr., 8006 Zürich (CH)
(72) Erfinder: Stoev, A., Dr., 8006 Zürich (CH)
(74) Vertreter: Pellmann, Hans-Bernd, Dipl.-Ing.

(57) **Zusammenfassung**

Frequenzumrichter für eine Antriebsvorrichtung mit Wechselstrommotor **(2)**, wobei ein in der Antriebsvorrichtung integriertes Umrichtermodul **(3)** vorgesehen ist.

Herkömmliche integrierte Frequenzumrichter erfordern aufgrund thermischer Ableitungsprobleme bauliche Veränderungen des Wechselstrommotors **(2)** der Antriebsvorrichtung. Es ist daher Aufgabe der vorliegenden Erfindung einen Frequenzumrichter bereitzustellen, der ohne wesentliche bauliche Veränderungen des Wechselstrommotors **(2)** integrierbar ist.

Durch thermische Kopplung eines Trägerteils des Umrichtermoduls **(3)** mit der Lüfterhaube des Wechselstrommotors **(2)** bzw. durch Ausgestaltung des Trägerteils als modifizierte Lüfterhaube **(4)** kann das bei der Integration auftretende Temperaturproblem ohne weitere bauliche Veränderungen des Wechselstrommotors **(2)** gelöst werden. Somit ist eine Integration des Frequenzumrichters mit einem beliebigen Standard- oder Normmotor und damit eine vorteilhafte getrennte Herstellung von Umrichtermodulen **(3)** für verschiedene Normmotoren möglich.

Die Verwendung von Normmotoren ermöglicht eine kostengünstige Herstellung der Antriebsvorrichtung unter Beibehaltung der Motorabmessungen.

## Beschreibung

Die Erfindung bezieht sich auf einen Frequenzumrichter zur Steuerung einer Motordrehzahl und/oder Motorleistung eines Wechselstrommotors und auf eine Antriebsvorrichtung mit einem Wechselstrommotor und dem Frequenzumrichter.

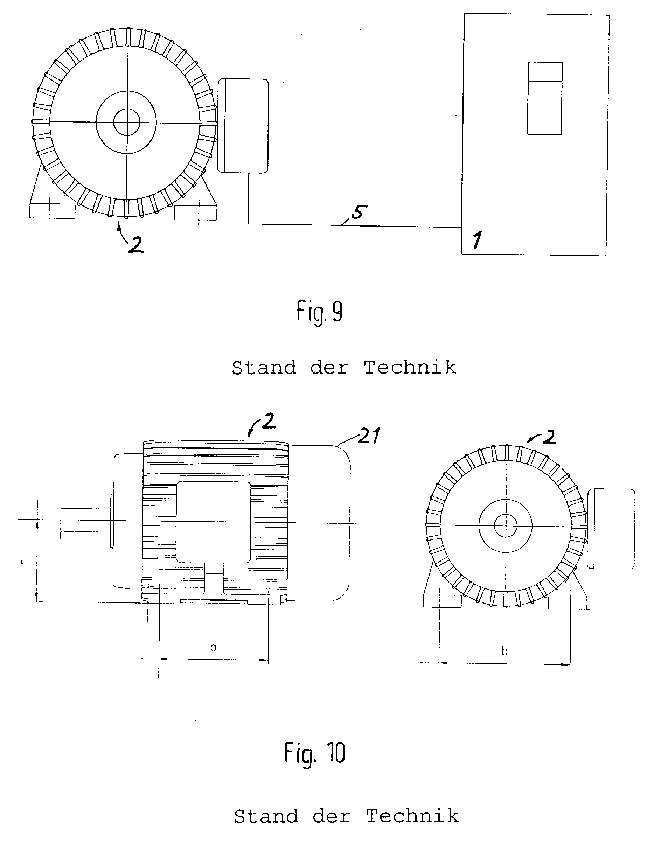

Fig. 9 zeigt eine bekannte Antriebsvorrichtung mit einem Wechselstrommotor 2, der zugeführte elektrische Energie in mechanische Energie umwandelt, und einem Frequenzumrichter 1. Der Frequenzumrichter 1 dient der Umwandlung einer zugeführten Netzspannung mit konstanter Amplitude und Frequenz in eine Ausgangsspannung mit variabler Frequenz und Amplitude. Weiterhin ist eine Steuereinrichtung als Bedienungsschnittstelle vorgesehen, die Steuer- bzw. Schutzsignale für einen Leistungsteil 16 des Frequenzumrichters erzeugt.

Der Wechselstrommotor 2 und der Frequenzumrichter 1 sind als getrennt Einheiten ausgeführt, die über elektrische Verbindungsleitungen 5 miteinander verbunden sind, wobei der Wechselstrommotor 2 aus Kostengründen häufig ein Normmotor ist.

Ein derartiger Normmotor 2 ist in Fig. 10 dargestellt. Charakteristische Normmerkmale des Normmotors 2 sind Achsenhöhe h und Befestigungsabstände a und b in der Längs- bzw. Querachse. An einem axialen Ende des Normmotors befindet sich ein Eigenlüfter 20, der durch eine Lüfterhaube 21 abgedeckt ist.

Es ist wünschenswert, den Wechselstrommotor 2 und den Frequenzumrichter in einer Antriebsvorrichtung zu integrieren. Eine solche Integration bietet die Vorteile einer einfachen Inbetriebnahme der Antriebsvorrichtung, einer optimalen Anpassung des Wechselstrommotors 2 an den Frequenzumrichter 1, geringer Abmessungen, sowie fehlender Verbindungsleitungen 5. Ferner ermöglicht die gemeinsame Nutzung des Lüfters 20 durch den Wechselstrommotor 2 und den Frequenzumrichter 1 eine Kosten- und Volumenreduzierung
Folgende Integrationslösungen sind bereits aus dem Stand der Technik bekannt.

Aus der Veröffentlichung von Böhm, W. u. a., "Der VEM-Kompaktantrieb - nicht nur ein Motor mit integriertem Frequenzumrichter", ELEKTRIE, Berlin 48(1994) 8/9, S. 296-298 und aus der Druckschrift EP 0 681 360 A2 ist eine integrierte Anordnung bekannt, bei der ein Frequenzumrichter auf einem Wechselstrommotor nach dem "Huckepack"-Prinzip angeordnet ist.

Ferner zeigt die Druckschrift G 93 05 174.3 eine Integration eines Frequenzumrichters in axialer Richtung hinter dem Wechselstrommotor durch Verlängerung des Statorgehäuses. Dabei ist der Frequenzumrichter in einem vergrößerten Lagerschild bzw. Motorgehäuse angeordnet.

In den beiden vorgenannten Fällen ist jedoch ein modifiziertes Statorgehäuse des Wechselstrommotors und damit ein spezieller Wechselstrommotor erforderlich. Die "Huckepack"-Lösung führt zudem zu einer Vergrößerung der vertikalen Abmessungen des Wechselstrommotors. Eine solche Motorvergrößerung ist nachteilig, da der verfügbare Raum für Antriebsvorrichtungen in Arbeitsmaschinen odgl. im allgemeinen gering bemessen ist.

Des weiteren ist die thermische Kopplung zwischen dem Statorgehäuse bzw. dem Lagerschild des Wechselstrommotors und der Frequenzumrichterelektronik nachteilig, da die Statortemperatur über 100°C ansteigen kann, die Frequenzumrichterelektronik dagegen ab 70°C in ihrer Funktionsfähigkeit beeinträchtigt ist. Daher ist beim genannten Beispiel mit axialer Umrichterintegration am umrichterseitigen Ende der Antriebsvorrichtung ein Fremdlüfter erforderlich, was die Verwendung eines Standard- oder Normmotors ausschließt.

Bei der "Huckepack"-Lösung wird das Temperaturproblem durch eine spezielle Ausgestaltung einer Trägerbaugruppe des Frequenzumrichters in Verbindung mit einer speziellen Anordnung der Statorkühlrippen gelöst, wodurch wiederum die Verwendung eines Standard- oder Normmotors ausgeschlossen ist

Es ist daher Aufgabe der vorliegenden Erfindung einen Frequenzumrichter für eine Antriebsvorrichtung bereitzustellen, der ohne wesentliche bauliche Veränderungen des Wechselstrommotors integrierbar ist

Diese Aufgabe wird gelöst durch einen Frequenzumrichter gemäß Patentanspruch 1.

Durch die thermische Kopplung des Trägerteils des Umrichtermoduls mit der Lüfterhaube des Wechselstrommotors bzw. durch die Ausgestaltung des Trägerteils als modifizierte Lüfterhaube kann das bei der Integration auftretende Temperaturproblem ohne weitere bauliche Veränderungen des Wechselstrommotors gelöst werden.

Somit ist eine Integration des Frequenzumrichters mit einem beliebigen Standard- oder Normmotor und damit eine vorteilhafte getrennte Herstellung von Umrichtermodulen für verschiedene Normmotoren möglich.

Die Verwendung von Normmotoren ermöglicht eine kostengünstige Herstellung der Antriebsvorrichtung unter Beibehaltung der Motorabmessungen.

Vorteilhafte Weiterbildungen der vorgenannten Erfindung sind in den Unteransprüchen angegeben.

Nachfolgend wird die Erfindung anhand von Ausführungsbeispielen unter Bezugnahme auf die Zeichnungen näher erläutert. Es zeigen:
Fig. 1 eine Frontansicht und eine Seitenansicht als Teilschnitt der Antriebsvorrichtung gemäß einem ersten Ausführungsbeispiel;
Fig. 2 Frontansichten der Antriebsvorrichtung mit außenseitig bzw. im Bereich der Kühlrippen angeordneter Kondensatorbank;
Fig. 3 ein Blockschaltbild eines elektronischen Leistungsteils des Frequenzumrichters;
Fig. 4 eine Front-, Seitenschnitt- und Rückansicht eines Umrichtermodulgehäuses;
Fig. 5 eine Seitenansicht als Teilschnitt der Antriebsvorrichtung gemäß einem zweiten Ausführungsbeispiel;
Fig. 6 eine Seitenansicht als Teilschnitt der Antriebsvorrichtung gemäß einem dritten Ausführungsbeispiel;
Fig. 7 eine Seitenansicht als Teilschnitt der Antriebsvorrichtung gemäß einem vierten Ausführungsbeispiel;
Fig. 8 eine Seitenansicht als Teilschnitt der Antriebsvorrichtung gemäß einem fünften Ausführungsbeispiel;
Fig. 9 eine Antriebsvorrichtung mit getrennt angeordnetem Frequenzumrichter gemäß dem Stand der Technik;
Fig. 10 eine Seiten- und Frontansicht eines Normmotors gemäß dem Stand der Technik.

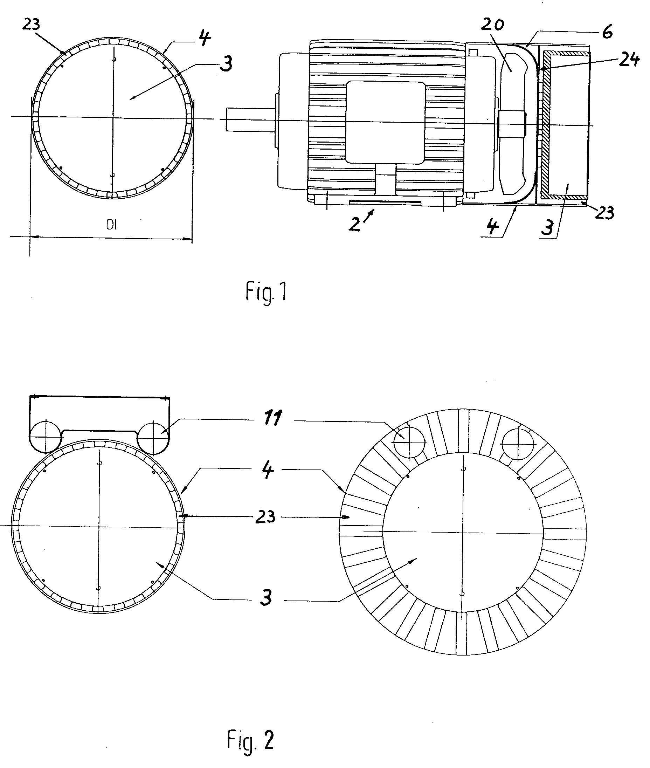

In Fig. 1 ist eine Frontansicht und eine Seitenansicht als Teilschnitt einer Antriebsvorrichtung gemäß einem ersten Ausführungsbeispiel dargestellt, mit einem zylinderförmigen Umrichtermodul 3, dessen Außendurchmesser an den Außendurchmesser eines Wechselstrommotors 2, der beispielsweise ein Standard- oder Normmotor sein kann, angepaßt ist. Der Wechselstrommotor 2 kann als Asynchron-, Synchron-, Reluktanzmotor oder als Motor mit geschalteter Reluktanz ausgebildet sein.

Das Umrichtermodul 3 ist in einer als Trägerteil wirkenden und von dem Statorgehäuse des Wechselstrommotors 2 thermisch entkoppelten modifizierten Lüfterhaube 4 eines Eigenlüfters 20 mit einem Außendurchmesser D1 eingepreßt oder auf sonstige Weise daran befestigt, wobei die Außenform des Umrichtermoduls 3 der modifizierten Lüfterhaube 4 folgt. Die modifizierte Lüfterhaube 4 ersetzt die ursprüngliche Lüfterhaube 21 wie beispielsweise eine Normlüfterhaube des Wechselstrommotors 2.

Das Gehäuse des Umrichtermoduls 3 weist an seinem Außenumfang axiale Kühlrippen 23 auf, die in Verbindung mit der Lüfterhaube 4 des Wechselstrommotors 2 axiale Kanäle für die Kühlluft bilden. An einer dem Eigenlüfter 20 zugewandte Außenseite einer Bodenwand des Umrichtermoduls 3 sind radiale Kühlrippen 24 angeordnet, die in Verbindung mit am Lüfterzylinder 4 angebrachten Luftblenden 6 radiale Kanäle für die Kühlluft bilden. Dabei sorgen die Luftblenden 6 dafür, daß die Kühlluft konzentriert um die Mittelachse des Umrichtermoduls 3 bzw. die Motorachse ein- bzw. ausströmt, so daß eine Zentrifugallüftung erzeugbar ist. Die Kühlkanäle gewährleisten eine von der Lage des Wechselstrommotors 2 unabhängige Warmluftabfuhr. Die Luftblenden 6 dienen ferner der Verhinderung einer Rückstrahlung von Wärme zu dem Umrichtermodul 3.

Durch vorgenannte Ausgestaltung ist eine ausreichende Austauschfläche zwischen Kühlmedium und Gehäuse des Umrichtermoduls 3 bei ausreichender Funktion des Eigenlüfters 20 gewährleistet. Zur Verbesserung der Kühlwirkung, insbesondere der Motorkühlung, können zusätzliche Lufteintrittsöffnungen in den Lüfterzylinder 4 eingebracht werden.

In dem Umrichtermodul 3 ist ein nachstehend näher erläutertes Leistungsmodul 16 des Frequenzumrichters untergebracht. Vorzugsweise werden aufgrund entsprechender Verlustleistungswerte erwärmungsgefährdete Schaltungskomponenten bzw. Bauelemente thermisch gut leitend an der Innenseite der dem Eigenlüfter 20 zugewandten Bodenwand des Umrichtermoduls 3 angebracht, so daß eine ausreichende Kühlung gewährleistet ist.

Das Gehäuse des Umrichtermoduls 3 ist an der dem Eigenlüfter 20 abgewandten Seite mit einer abnehmbaren Verschlußplatte verschließbar, die vorzugsweise thermisch leitend ist.

Weitere mögliche Frequenzumrichterteile wie beispielsweise ein externer Bremswiderstand 9, ein Fremdlüfter 8, eine Bedieneinrichtung, eine Drehzahl- bzw. Lageerfassungseinrichtung 7 und eine Kondensatorbank 11 werden vorzugsweise außerhalb des Umrichtermoduls 3 angeordnet.

Fig. 2 zeigt jeweils eine Frontansicht der Antriebsvorrichtung mit extern angeordneter Kondensatorbank 11, die vorzugsweise über eine elektrische Verbindung mit geringer Induktivität mit dem Leistungsteil 16 verbunden ist. Die Kondensatorbank 11 besteht aus mehreren zylinderförmigen Kondensatoren wie beispielsweise Elektrolytkondensatoren, die entsprechend der linken Darstellung in Fig. 2 am Außenumfang des Lüfterzylinders 4 oder entsprechend der rechten Darstellung im Bereich der axialen Kühlrippen 23 des Umrichtermoduls 3 angebracht sind. Bei der links dargestellten Außenmontage können die Kondensatoren in einem Gehäuse untergebracht sein, das der geometrischen Form der Kondensatoren angepaßt ist, wobei auch weitere Schaltelemente wie Anschlußklemmen oder eine Netzdrossel in dem Gehäuse angeordnet sein können. Bei der Außenmontage ist die Größe des Kondensatorbankgehäuses vorzugsweise so zu wählen, daß die normierte Motorabmessung einschließlich der Höhe eines Motoranschlußkastens nicht überschritten und die Lüfterwirkung nicht beeinflußt wird.

Die rechts dargestellte Anordnung der Kondensatorbank 11 bietet sich bei größeren Motordurchmessern aufgrund der damit verbundenen größeren Höhe der axialen Kühlrippen 23 des Umrichtermoduls 3 an. Diese Anordnung gewährleistet zudem eine ausreichende Kühlung der Kondensatorbank 11.

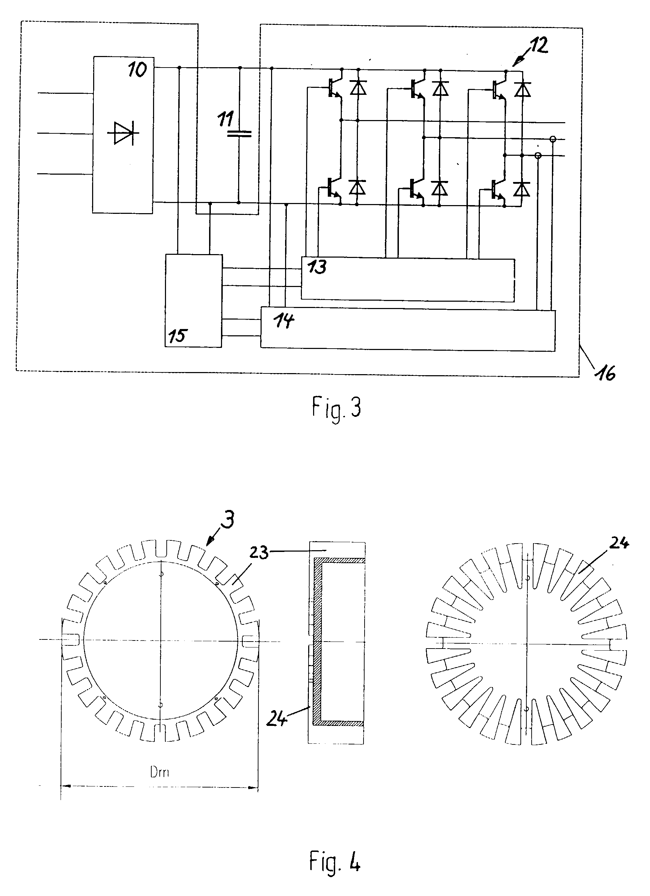

Fig. 3 zeigt ein Blockschaltbild der internen Komponenten des Leistungsteils 16 des Umrichtermoduls 3. Leistungshalbleiter eines motorseitigen Wechselrichters 12 befinden sich in einem oder mehreren Modulen, die am Gehäuse des Umrichtermoduls 3, vorzugsweise an der Innenseite der dem Eigenlüfter 20 zugewandten Gehäusewand, angeordnet sind und durch dieses gekühlt werden. Zur Erzeugung einer Drehstrom-Ausgangsspannung können Leistungstransistoren des motorseitigen Wechselrichters 12, wie in Fig. 3 dargestellt, in einer dreiphasigen Brücke geschaltet sein.

Die Kühlkörper der Leistungsmodule oder anderer verlustleistungserzeugender Komponenten des Leistungsteils 16 können direkt an der Innenwand des Gehäuse des Umrichtermoduls 3 befestigt sein. Dadurch ist sowohl eine mechanische als auch eine thermische Kopplung der Leistungsmodule mit dem Gehäuse erreichbar. Falls die Kühlkörper der Leistungsmodule nicht elektrisch von diesen isoliert sind, kann ein thermisch leitender Isolator zwischen den Kühlkörpern und dem Gehäuse angeordnet werden.

Das Leistungsteil 16 weist ferner einen netzseitigen Gleichrichter 10, eine Schutz- und Ansteuerelektronik 13, ein Netzteil 15 wie beispielsweise ein Schaltnetzteil zur Versorgung der Leistungselektronik und eine Strom/Spannungs-Istwerterfassungseinrichtung 14 auf.

Der Gleichrichter 10 kann in einem getrennten Modul, das ebenfalls durch die Gehäusewand des Umrichtermoduls 3 gekühlt wird, untergebracht sein.

Bei einer Ausführung des Frequenzumrichters als Direkt- oder Matrixumrichter werden der Gleichrichter 10 und der Wechselrichter 12 durch Leistungstransistoren in Direkt- oder Matrixstromrichteranordnung ersetzt.

Wird ein netzseitiger Wechselrichter verwendet, so kann der Gleichrichter 10 entfallen, wobei die Leistungshalbleiter des netzseitigen Wechselrichters ebenfalls in einem durch das Umrichtergehäuse gekühlten Modul untergebracht sein können.

Das Ersetzen des Gleichrichters 10 durch einen Wechselrichter (Vierquadrantensteller) ermöglicht eine vorteilhafte Rückspeisung von Energie ins Netz.

Das Netzteil 15 wird über die Kondensatorbank 11 gespeist, wobei vorzugsweise ein Sperrwandler-Netzteil (Flyback-Netzteil) verwendet wird. Ein Schalter für das Netzteil kann in dem Leistungsteil 16 oder auf einer Leiterplatte des Umrichtermoduls 3 angeordnet sein. Gleiches gilt für einen Schalter des nachfolgend erläuterten Bremswiderstands 9 sowie für eine Treiberelektronik der Leistungshalbleiter. Ein Transformator des Netzteils 15 befindet sich auf der Leiterplatte.

Die Strom-Istwerterfassung in der Istwerterfassungseinrichtung 14 kann durch Messung von zumindest zwei Phasenströmen des Wechselstrommotors 2 anhand von Messshuntwiderständen erfolgen. Bei einer Sternschaltung des Wechselstrommotors 2 kann je ein Shuntwiderstand in Reihe zwischen eine Statorwicklung und den Sternpunkt des Wechselstrommotors 2 geschaltet sein. Das Sternpunktpotential kann dabei als Bezugspotential für die Elektronik des Umrichtermoduls 3 verwendet werden.

Die Shuntwiderstände können in dem Umrichtermodul 3 angeordnet sein, wobei die Verbindung der Statorwicklungen zu dem Sternpunkt in dem Wechselstrommotor 2 erfolgen kann. Alternativ können die Shuntwiderstände in einem Klemmkasten des Wechselstrommotors 2 angeordnet sein, wobei die Verbindung zwischen den Statorwicklungen und dem Sternpunkt ebenfalls in dem Klemmkasten erfolgen kann.

Die Spannungs-Istwerterfassung kann beispielsweise durch Messung der Spannung über der Kondensatorbank 11 erfolgen.

Die zugehörigen Bauelemente der Istwerterfassungseinrichtung sowie eine Temperaturerfassung des Leistungsteils 16 und der Kühlkörper können sich auf der Leiterplatte befinden.

Als zusätzliche Komponenten kann das Umrichtermodul 3 eine Steuereinrichtung und eine Bedienungsschnittstelle aufweisen. Die Steuereinrichtung umfaßt zumindest einen Mikroprozessor mit Peripheriebausteinen wie beispielweise Speicher und Ein/Ausgabebausteine und erfüllt Regel- und Schutzfunktionen. Die Bedienungsschnittstelle dient zur externen Kommunikation des Umrichtermoduls 3, wobei die Kommunikation vorzugsweise über eine serielle Schnittstelle erfolgt. Weiterhin kann eine Hilfsspannung zur Versorgung eines externen Bedienungsgeräts über die Schnittstelle zur Verfügung gestellt werden.

Zur Ermöglichung eines Betriebs bei niedrigen Außentemperaturen befindet sich die Steuereinrichtung solange in einem rückgesetzten Zustand, bis eine minimale Betriebstemperatur erreicht oder überschritten wird, wobei ein Heizvorgang vorgesehen ist, während dem das Leistungsteil 16 zur Erzeugung von Wärme in dem Umrichtermodul 3 angesteuert wird, und wobei bei Erreichen der minimalen Betriebstemperatur eine Bereitschaftsanzeige erfolgt. Dadurch ist eine zuverlässige Funktionsweise der Elektronikbauteile ohne zusätzliche Standheizung erzielbar.

Die Steuereinrichtung ist vorzugsweise als separate Baugruppe ausgebildet, die mit der Leiterplatte durch Löt- oder Steckanschlüsse oder über Kabel verbunden ist und sich in einem für einen Anwender zugänglichen Gehäuse zwecks Erreichbarkeit von Anschlußklemmen bzw. der seriellen Schnittstelle befindet. Dabei ist die Steuereinrichtung zweckmäßigerweise derart auszubilden, daß eine Berührung von potentialführenden Komponenten ausgeschlossen ist.

Zur Vermeidung einer Überschreitung der maximalen Betriebstemperatur der Steuereinrichtung kann ein thermisch mit der Außenwand des Umrichtermoduls 3 gekoppelter Kühlkörper vorgesehen sein.

Falls die Steuereinrichtung innerhalb des Umrichtermoduls 3 angeordnet ist, kann eine thermisch nichtleitende Blende zur thermischen Entkopplung der Steuereinrichtung von den Leistungsmodulen vorgesehen sein.

Sowohl die Steuereinrichtung als auch die Leiterplatte können für alle Motortypen gleich ausgeführt sein.

Falls vorhanden, kann der Bremsschalter für den Bremswiderstand und dessen Steuerung im Leistungsmodul oder im Umrichtermodul 3 integriert sein.

Die Leiterplatte wird mit elektrischen Anschlüssen der Leistungsmodule elektrisch verbunden und ggf. mit zusätzlichen mechanischen Verbindungselementen wie beispielsweise Abstandsbolzen odgl. am Gehäuse des Umrichtermoduls 3 befestigt.

Auf der Innenwand des Umrichtermoduls kann um die Leistungsmodule, d.h. beispielsweise im Bereich der dem Eigenlüfter 20 zugewandten Bodenwand, eine thermisch schlecht leitende Schicht wie z.B. eine Vergußschicht angeordnet sein, die die thermische Strahlung oder Rückstrahlung von der Innenwand in das Innere des Umrichtermoduls 3 dämpft. Des weiteren kann die Leiterplatte und ggf. die Steuereinrichtung von einer thermisch gut leitenden Schicht wie z.B. ebenfalls eine Vergußschicht umgeben sein, die die Wärme zu einer kühlen Außenwand des Umrichtermoduls 3 abführt. Vorzugsweise handelt es sich dabei um eine Gehäuseaußenwand, die zuerst durch die einströmende Kühlluft gekühlt wird. Die beiden Schichten sind elektrisch nicht leitend und isolieren damit die im Inneren des Umrichtermoduls 3 befindlichen Komponenten voneinander. Durch das Vergießen steigt die mechanische Festigkeit, was zu einer vorteilhaften Verringerung der Vibrationsanfälligkeit des Umrichtermoduls 3 führt.

Als Anschlüsse des Umrichtermoduls 3 sind Leistungsanschlüsse für den Wechselstrommotor 2 und für eine Netzversorgung, ggf. Anschlüsse für die Kondensatorbank 11 und Steueranschlüsse für Bedienelemente oder die etwaige externe Steuereinrichtung vorgesehen.

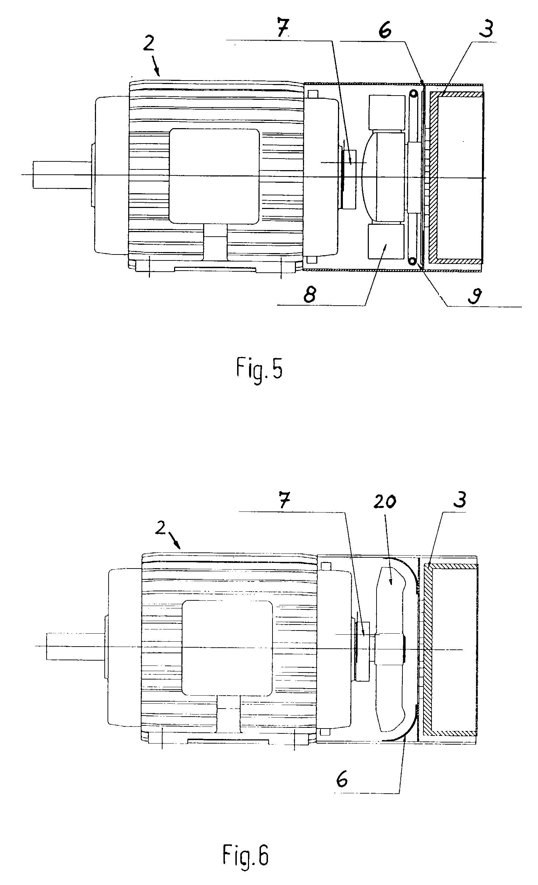

Fig. 4 zeigt eine Front-, Seitenschnitt- und Rückansicht des Gehäuses des Umrichtermoduls 3 ohne Verschlußplatte.

Der Gehäuseaußendurchmesser Dm ist an die Motorabmessungen angepaßt, so daß ein paßgenaues Einfügen in die modifizierte Lüfterhaube 4 gewährleistet ist. Am Außenumfang des Gehäuses sind die axialen Kühlrippen 23 und an der dem Eigenlüfter 20 zugewandten Rückseite des Gehäuses die radialen Kühlrippen 24 erkennbar.

Das Gehäuse ist vorzugsweise aus Aluminium gegossen oder gepreßt. Dabei sind durch Verkürzen wie beispielsweise Abdrehen der axialen Kühlrippen 23 mehrere Baugrößen aus einer Guß- oder Paßform herstellbar, so daß eine Anpassung des Außendurchmessers an den Motordurchmesser möglich ist. Die damit verbundene Verkleinerung der axialen Kühlkanäle ist unkritisch, da die Verlustwärme bei kleineren Wechselstrommotoren geringer ist.

Zur Erhöhung der elektromagnetischen Verträglichkeit (EMV) kann die Abdeckplatte des Umrichtermodulgehäuses aus magnetisch abschirmendem Material wie beispielsweise Stahl hergestellt sein. Des weiteren kann auch die modifizierte Lüfterhaube 4 aus magnetisch abschirmendem Material wie beispielsweise Stahl hergestellt sein. Zudem kann ein Hochfrequenzfilter zum Ausfiltern von Hochfrequenz-Störkomponenten am Netzeingang des Gleichrichters 10 im Umrichtermodul 3 integriert sein. Netzkabel können in durch die modifizierte Lüfterhaube 4 und das Gehäuse der Kondensatorbank 11 gebildeten Kabelschächten herausgeführt werden.

Die als erstes Ausführungsbeispiel beschriebene Konfiguration eignet sich insbesondere für Pumpen- oder Lüfterantriebe.

Ein zweites Ausführungsbeispiel der Antriebsvorrichtung mit Fremdlüfter 8, externem Bremswiderstand 9 und Drehzahlgeber 7 als zusätzliche Erweiterungsoptionen ist in Fig. 5 dargestellt.

Der Fremdlüfter 8 ist erforderlich, wenn der Wechselstrommotor 2 mit einem hohen Drehmoment und niedriger Drehzahl betrieben werden soll und somit der Eigenlüfter 20 zur Kühlung nicht ausreicht. Der Fremdlüfter 8 ist am Umrichtermodul 3 befestigt und kann am Ende der Antriebsvorrichtung oder gemäß Fig. 5 zwischen dem Wechselstrommotor 2 und dem Umrichtermodul 3 angeordnet sein. Er ist durch das Umrichtermodul 3 aktivierbar und dient sowohl zur Kühlung des Wechselstrommotors 2 als auch des Umrichtermoduls 3, so daß eine Kühlung des Umrichtermoduls 3 auch bei stehendem Motor möglich ist. Die Steuerung des Fremdlüfters 8 einschließlich Netzschalter kann im Umrichtermodul 3 integriert sein.

Die umrichterseitige Steuerbarkeit des Fremdlüfters 8 ermöglicht eine Verbesserung der Umrichterkühlung, da beim Abschalten der Antriebsvorrichtung und damit auch der Eigenlüftung Wärme aus dem Motorinneren nach außen strömt. Dieser Effekt führt insbesondere nach einem Dauerbetrieb zu einer nachteiligen Temperaturerhöhung in dem Umrichtermodul 3 und ist besonders ausgeprägt, wenn sich das Umrichtermodul 3 im montierten Zustand der Antriebsvorrichtung oberhalb des Wechselstrommotors 2 befindet, so daß die erwärmte Luft das Umrichtermodul 3 umströmt.

Bei größeren Leistungen kann der Netzschalter des Fremdlüfters 8 außerhalb des Umrichtermoduls 3 an dem Fremdlüfter 8 selbst oder an der modifizierten Lüfterhaube 4 angeordnet sein.

Es bietet sich an, den Fremdlüfter 8 zusammen mit einem externen Bremswiderstand 9 zu verwenden. Der externe Bremswiderstand 9 weist eine höhere Leistung als ein im Umrichtermodul 3 integrierter Bremswiderstand auf und kann mechanisch an einem Trägerteil des Umrichtermoduls 3 befestigt sein. Er kann am Ende der Antriebsvorrichtung vor dem Umrichtermodul 3 oder vorzugsweise gemäß Fig. 5 zwischen dem Umrichtermodul 3 und dem Fremdlüfter 8 angeordnet sein. Bei dieser Anordnung umströmt die Kühlluft zunächst das Umrichtermodul 3, dann die Luftblende 6 und anschließend den Bremswiderstand 9. Die Luftblende 6 zwischen dem Bremswiderstand 9 und dem Umrichtermodul 3 bewirkt, daß keine Wärme vom Bremswiderstand zum Umrichtermodul 3 zurückgestrahlt wird.

Die Achse des Wechselstrommotors 2 kann bei diesem Ausführungsbeispiel verkürzt werden, da kein Eigenlüfter 20 erforderlich ist. Aufgrund der damit verbundenen kürzeren Motorachse verlängert sich die gesamte Antriebsvorrichtung durch die Fremdlüftung nur geringfügig.

Der Drehzahlgeber 7 wird an einem Lager oder an dem Lagerschild des dem Umrichtermodul 3 zugewandten Endes des Wechselstrommotors 2 angeordnet. Dabei kann das Lagerschild des Motors in der Weise bearbeitet wie beispielsweise abgedreht werden, daß der Drehzahlgeber unmittelbar am Lagerschild befestigt werden kann. Als Drehzahlgeber 7 kann eine Lichtschranke, ein Resolver oder ein Magnetgeber (Hallsensor) verwendet werden.

Eine Drehzahlgeberschnittstelle sowie eine Drehzahlgeberspeisung kann in dem Umrichtermodul 3 angeordnet sein und die Verbindung zwischen dem Umrichtermodul 3 und dem Drehzahlgeber 7 kann durch eine lösbare Steckverbindung so ausgeführt sein, daß das Umrichtermodul 3 abnehmbar ist. Eine Drehzahlgeberscheibe kann senkrecht an einer Rotorachse des Wechselstrommotors 2 befestigt und eine Detektoreinrichtung mit zugehöriger Elektronik zur Erfassung der Drehzahl in dem Umrichtermodul 3 integriert sein.

Fig. 6 zeigt ein drittes Ausführungsbeispiel mit Eigenlüfter 20 und Drehzahlgeber 7, wobei der Drehzahlgeber 7 zwischen dem Eigenlüfter 20 und dem Lagerschild angeordnet ist.

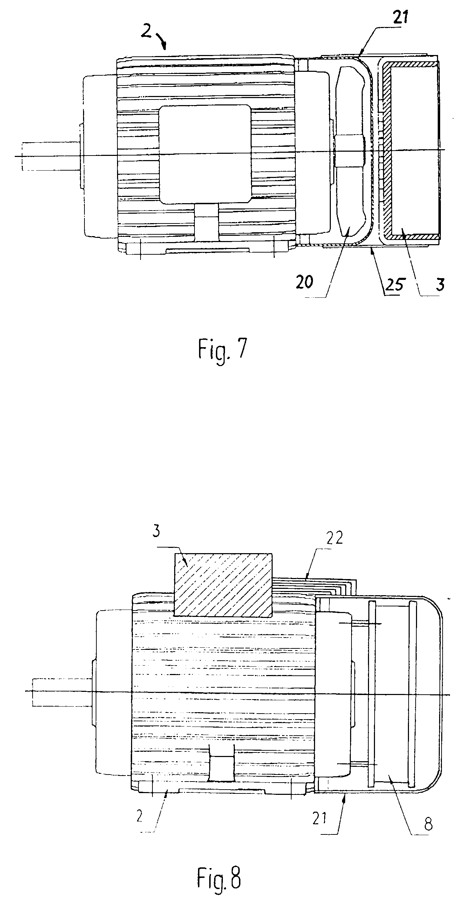

Gemäß einem in Fig. 7 dargestellten vierten Ausführungsbeispiel ist das Umrichtermodul 3 unmittelbar an der Originallüfterhaube 21 des Wechselstrommotors 2 angebracht. Somit ist die modifizierte Lüfterhaube 4 hier nicht erforderlich. Der Zwischenraum zwischen dem Umrichtermodul 3 und der Lüfterhaube 21 kann mit einer ringförmigen Abdeckung 25 beispielsweise aus Kunststoff abgeschlossen werden, wobei das Umrichtermodul 3 mittels angeschweißten Laschen oder ähnlichen Trägerteilen fixierbar ist, die vorzugsweise von dem Wechselstrommotor 2 thermisch entkoppelt sind.

Besondere Vorteile dieser Anordnung bestehen darin, daß eine billige Standardlüfterhaube 21 eingesetzt werden kann, daß die Form der Luftblende 6 automatisch an den vom Motorhersteller eingesetzten Lüfter 20 angepaßt ist und die Luftzirkulation durch Form und Größe der Abdeckung 25 zusätzlich optimiert werden kann.

Gemäß einem in Fig. 8 gezeigten fünften Ausführungsbeispiel ist das Umrichtermodul 3 nicht an der Lüfterhaube 2 angeordnet, sondern befindet sich innerhalb eines modifizierten Motorklemmkastens eines Normmotors 2.

Bei dieser Ausführungsform ist die Sicherstellung einer ausreichenden Kühlung in allen Betriebszuständen entscheidend, da die Kühlluft der Motoreigenlüftung das Umrichtermodul 3 nicht umströmt. Zur Vermeidung der bereits erläuterten Temperaturerhöhung bei einer Motorabschaltung, wird der Motor auch im ausgeschalteten Zustand durch einen von dem Umrichtermodul 3 aus steuerbaren Fremdlüfter 8 solange gekühlt, bis die Wicklungstemperatur unter einen Wert gesunken ist, der eine zuverlässige Funktion der Umrichterbauteile gewährleistet.

Die Lüfterhaube 21 wird als Kühlkörper für das Umrichtermodul 3 verwendet, wobei die thermische Kopplung zwischen dem Umrichtermodul 3 und der Lüfterhaube 21 über ein Wärmeleitrohr (Heatpipe) 22 erfolgen kann. Ferner wird das Umrichtermodul 3 durch eine Wärmesperre wie beispielsweise eine thermisch isolierende Schicht vom Statorgehäuse des Wechselstrommotors 2 thermisch entkoppelt.

Die Kühlrippen des Umrichtermoduls 3 sind vorzugsweise so ausgestaltet, daß sie von den Kühlrippen des Wechselstrommotors 2 thermisch entkoppelt sind, wobei eine natürliche Konvektion sowohl bei horizontaler als auch bei vertikaler Befestigung des Motors 2 gewährleistet ist.

Frequenzumrichter für eine Antriebsvorrichtung mit Wechselstrommotor **(2)**, wobei ein in der Antriebsvorrichtung integriertes Umrichtermodul **(3)** vorgesehen ist.

Herkömmliche integrierte Frequenzumrichter erfordern aufgrund thermischer Ableitungsprobleme bauliche Veränderungen des Wechselstrommotors **(2)** der Antriebsvorrichtung. Es ist daher Aufgabe der vorliegenden Erfindung einen Frequenzumrichter bereitzustellen, der ohne wesentliche bauliche Veränderungen des Wechselstrommotors **(2)** integrierbar ist.

Durch thermische Kopplung eines Trägerteils des Umrichtermoduls **(3)** mit der Lüfterhaube des Wechselstrommotors **(2)** bzw. durch Ausgestaltung des Trägerteils als modifizierte Lüfterhaube **(4)** kann das bei der Integration auftretende Temperaturproblem ohne weitere bauliche Veränderungen des Wechselstrommotors **(2)** gelöst werden. Somit ist eine Integration des Frequenzumrichters mit einem beliebigen Standard- oder Normmotor und damit eine vorteilhafte getrennte Herstellung von Umrichtermodulen **(3)** für verschiedene Normmotoren möglich.

Die Verwendung von Normmotoren ermöglicht eine kostengünstige Herstellung der Antriebsvorrichtung unter Beibehaltung der Motorabmessungen.

## Patentansprüche

1. Frequenzumrichter zur Steuerung einer Motordrehzahl und/oder Motorleistung eines Wechselstrommotors **(2)**,
**dadurch gekennzeichnet, daß**
der Frequenzumrichter als ein auf den Wechselstrommotor montierbares Umrichtermodul **(3)** ausgebildet ist, dessen Trägerteil im montierten Zustand mit einer Lüfterhaube **(21)** des Wechselstrommotors thermisch koppelbar oder selbst als Lüfterhaube ausgebildet ist.

2. Frequenzumrichter nach Anspruch 1,
**dadurch gekennzeichnet, daß**
das Umrichtermodul **(3)** Leistungsmodule eines Gleichrichters **(10)** und eines Wechselrichters **(12)**, Schutz- und Ansteuereinrichtungen **(13)**, eine Istwerterfassungseinrichtung **(14)**, eine Steuereinrichtung und Hochfrequenzfiltereinrichtungen umfaßt.

3. Frequenzumrichter nach Anspruch 2,
**dadurch gekennzeichnet, daß**
die Leistungsmodule als Direkt- oder Matrixumrichter ausgebildet sind.

4. Frequenzumrichter nach Anspruch 2 oder 3,
**dadurch gekennzeichnet, daß**
die Steuereinrichtung sich solange in einem rückgesetzten Zustand befindet, bis eine minimale Betriebstemperatur erreicht oder überschritten wird, wobei ein Heizvorgang vorgesehen ist, während dem das Leistungsteil zur Erzeugung von Wärme in dem Umrichtermodul **(3)** angesteuert wird, und wobei bei Erreichen der minimalen Betriebstemperatur eine Bereitschaftsanzeige erfolgt.

5. Frequenzumrichter nach einem der Ansprüche 2 bis 4,
**gekennzeichnet durch**
eine thermisch nichtleitende Blende zur thermischen Entkopplung der Steuereinrichtung von den Leistungsmodulen.

6. Frequenzumrichter nach einem der Ansprüche 2 bis 4,
**gekennzeichnet durch**
zwei Schichten von Vergußmassen zur thermischen Entkopplung der Steuereinrichtung von den Leistungsmodulen, wobei die erste Vergußschicht thermisch schlecht leitend ist und auf einer Innenwand des Umrichtermoduls im Bereich der Leistungsmodule zur Unterdrückung der Wärmerückstrahlung angeordnet ist und wobei die zweite Vergußschicht thermisch gut leitend ist und eine thermische Kopplung zu einem Teil einer Gehäuseaußenwand des Umrichtermoduls bewirkt, die zuerst durch eine einströmende Kühlluft gekühlt wird.

7. Frequenzumrichter nach einem der vorgenannten Ansprüche,
**dadurch gekennzeichnet, daß**
das Umrichtermodul **(3)** unmittelbar an der Lüfterhaube **(21)** des Wechselstrommotors **(2)** befestigt ist.

8. Frequenzumrichter nach einem der vorgenannten Ansprüche,
**dadurch gekennzeichnet, daß**
das Trägerteil des Umrichtermoduls **(3)** als abnehmbare modifizierte Lüfterhaube **(4)** des Wechselstrommotors **(2)** ausgebildet ist, welche eine Normlüfterhaube **(21)** ersetzt.

9. Frequenzumrichter nach Anspruch 8,
**dadurch gekennzeichnet, daß**
die modifizierte Lüfterhaube **(4)** aus magnetisch abschirmendem Material besteht.

10. Frequenzumrichter nach Anspruch 8 oder 9,
**dadurch gekennzeichnet, daß**
das Umrichtermodul **(3)** am Ende der modifizierten Lüfterhaube **(4)** angeordnet ist und seine Außenform der Form der modifizierten Lüfterhaube **(4)** folgt.

11. Frequenzumrichter nach einem der Ansprüche 7 bis 10,
**dadurch gekennzeichnet, daß**
die einem Lüfter **(20)** abgewandte Seite des Umrichtermoduls **(3)** magnetisch abschirmend und thermisch leitend verschlossen ist.

12. Frequenzumrichter nach einem der Ansprüche 7 bis 11,
**dadurch gekennzeichnet, daß**
das Gehäuse des Umrichtermoduls **(3)** Kühlrippen **(23)** aufweist, die derart ausgestaltet sind, daß die von einem Lüfter **(20)** des Wechselstrommotors **(2)** angesaugte Luft in der Weise kanalisiert wird, daß die Luft im Bereich der Motorachse in den Lüfter **(20)** einströmt und eine Zentrifugallüftung bewirkt.

13. Frequenzumrichter nach einem der Ansprüche 8 bis 12,
**gekennzeichnet durch**
eine Kondensatorbank **(11)**, die niederinduktiv mit den Leistungsmodulen verbunden ist und die in einem getrennten, mit dem Gehäuse des Umrichtermoduls **(3)** und/oder der modifizierten Lüfterhaube **(4)** thermisch und konstruktiv gekoppelten Gehäuse angeordnet ist.

14. Frequenzumrichter nach Anspruch 12,
**gekennzeichnet durch**
eine Kondensatorbank **(11)**, die niederinduktiv mit den Leistungsmodulen verbunden und im Bereich der Kühlrippen **(23)** des Umrichtermoduls **(3)** angeordnet ist.

15. Antriebsvorrichtung mit einem Wechselstrommotor und einem Frequenzumrichter nach einem der Ansprüche 1 bis 14 zur Steuerung der Drehzahl und/oder Leistung des Wechselstrommotors **(2)**,
**dadurch gekennzeichnet, daß**
die Lüfterhaube **(4; 21)** und das Trägerteil des Umrichtermoduls **(3)** von dem Wechselstrommotor **(2)** thermisch entkoppelt sind.

16. Antriebsvorrichtung nach Anspruch 15,
**dadurch gekennzeichnet, daß**
der Wechselstrommotor **(2)** als Asynchronmotor, Synchronmotor, Reluktanzmotor oder Motor mit geschalteter Reluktanz ausgebildet ist.

17. Antriebsvorrichtung nach Anspruch 15 oder 16,
**dadurch gekennzeichnet, daß**
eine Luftblende **(6)** vorgesehen ist, die die Wärmerückstrahlung zu dem Umrichtermodul **(3)** verhindert, wobei Kühlkanäle derart ausgebildet sind, daß eine von der Lage des Wechselstrommotors **(2)** unabhängige Warmluftabfuhr gewährleistet ist.

18. Antriebsvorrichtung nach einem der Ansprüche 15 bis 17,
**dadurch gekennzeichnet, daß**
der Wechselstrommotor **(2)** einen Fremdlüfter **(8)** aufweist, der sowohl den Wechselstrommotor **(2)** als auch das Umrichtermodul **(3)** kühlt, wobei der Fremdlüfter **(8)** durch das Umrichtermodul **(3)** aktivierbar ist, so daß das Umrichtermodul auch bei stehendem Wechselstrommotor **(2)** kühlbar ist.

19. Antriebsvorrichtung nach einem der Ansprüche 15 bis 18,
**dadurch gekennzeichnet, daß**
ein Drehzahlgeber **(7)** in einem Lager oder einem Lagerschild des Wechselstrommotors **(2)** integriert ist, wobei eine Drehzahlgeberschnittstelle sowie eine Drehzahlgeberspeisung in dem Umrichtermodul **(3)** angeordnet sind und die Verbindung zwischen dem Umrichtermodul **(3)** und dem Drehzahlgeber **(7)** durch eine lösbare Steckverbindung so ausgeführt ist, daß das Umrichtermodul **(3)** abnehmbar ist, und wobei eine Drehzahlgeberscheibe senkrecht an einer Rotorachse des Wechselstrommotors **(2)** befestigt ist und eine Detektoreinrichtung mit zugehöriger Elektronik zur Erfassung der Drehzahl in dem Umrichtermodul **(3)** integriert ist.

20. Antriebsvorrichtung mit einem Norm-Wechselstrommotor **(2)** und einem Frequenzumrichter nach einem der Ansprüche 1 bis 6 zur Steuerung der Drehzahl und/oder Leistung des Norm-Wechselstrommotors **(2)**,
**dadurch gekennzeichnet, daß**
das Umrichtermodul **(3)** an der Stelle eines Klemmkastens des Norm-Wechselstrommotors **(2)** angeordnet ist.

21. Antriebsvorrichtung nach Anspruch 20,
**dadurch gekennzeichnet, daß**
eine wärmeleitende Verbindung **(22)** zur Wärmeabfuhr zwischen dem Umrichtermodul **(3)** und einer als Kühlkörper dienenden Lüfterhaube **(21)** des Wechselstrommotors **(2)** vorgesehen ist.

22. Antriebsvorrichtung nach Anspruch 20 oder 21,
**gekennzeichnet durch**
einen Fremdlüfter **(8)**, der auch bei ausgeschaltetem Wechselstrommotor **(2)** durch das Umrichtermodul **(3)** steuerbar ist.

23. Antriebsvorrichtung nach einem der Ansprüche 20 bis 22,
**gekennzeichnet durch**
eine Wärmesperre zur thermischen Entkopplung des Umrichtermoduls **(3)** von einem Stator des Wechselstrommotors **(2)**, wobei die Kühlrippen **(23)** des Umrichtermoduls **(3)** von denen des Wechselstrommotors **(2)** thermisch entkoppelt und derart angeordnet sind, daß eine natürliche Konvektion sowohl bei horizontaler als auch bei vertikaler Lage des Wechselstrommotors **(2)** ermöglicht ist.

24. Antriebsvorrichtung nach einem der Ansprüche 15 bis 23,
**dadurch gekennzeichnet, daß**
die Statorwicklungen des Wechselstrommotors **(2)** in Stern geschaltet sind, je ein Meßwiderstand zur Messung eines Strom-Istwertes in Reihe zwischen eine entsprechende Statorwicklung und den Sternpunkt geschaltet ist, und der Sternpunkt als Bezugspotential für eine Elektronik des Umrichtermoduls **(3)** dient.

25. Antriebsvorrichtung nach Anspruch 24,
**dadurch gekennzeichnet, daß**
die Meßwiderstände in dem Umrichtermodul **(3)** angeordnet sind und die Verbindung der Statorwicklungen zum Sternpunkt in dem Wechselstrommotor **(2)** erfolgt.

26. Antriebsvorrichtung nach Anspruch 24,
**dadurch gekennzeichnet, daß**
die Meßwiderstände in einem Klemmkasten des Wechselstrommotors **(2)** angeordnet sind und die Verbindung der Statorwicklungen zum Sternpunkt ebenfalls in dem Klemmkasten erfolgt.

27. Antriebsvorrichtung nach einem der Ansprüche 15 bis 19,
**gekennzeichnet durch**
einen Bremswiderstand **(9)**, der auf dem Trägerteil des Umrichtermoduls **(3)** angeordnet ist und mit dem Umrichtermodul **(3)** eine Baueinheit in der Form bildet, daß die Kühlluft zuerst das Umrichtermodul **(3)**, dann den Bremswiderstand **(9)** und anschließend den Wechselstrommotor **(2)** kühlt, wobei die Luftblende **(6)** zwischen dem Bremswiderstand **(9)** und dem Umrichtermodul **(3)** angeordnet ist, so daß keine Wärme vom Bremswiderstand zum Umrichtermodul **(3)** zurückgestrahlt wird.
